**Europäisches Patentamt**

**European Patent Office**

**Office européen des brevets**

(19)

(11) Veröffentlichungsnummer : **0 313 519 B1**

(12) # EUROPÄISCHE PATENTSCHRIFT

(45) Veröffentlichungstag der Patentschrift :
24.07.91 Patentblatt 91/30

(51) Int. Cl.⁵ : **B05C 17/00, B65D 83/00**

(21) Anmeldenummer : **88810718.2**

(22) Anmeldetag : **20.10.88**

(54) Einrichtung zum Dosieren und Mischen von mindestens zwei Reaktionskomponenten.

(30) Priorität : 23.10.87 CH 4173/87
19.07.88 CH 2749/88
13.07.88 DE 3823708

(43) Veröffentlichungstag der Anmeldung :
26.04.89 Patentblatt 89/17

(45) Bekanntmachung des Hinweises auf die
Patenterteilung :
24.07.91 Patentblatt 91/30

(84) Benannte Vertragsstaaten :
AT BE CH DE ES FR GB GR IT LI LU NL SE

(56) Entgegenhaltungen :
EP-A- 0 058 989
EP-A- 0 094 033
EP-A- 0 151 751
DE-A- 2 537 022
FR-A- 2 424 856
US-A- 4 269 330
US-A- 4 326 650
US-A- 4 373 646
DE-G-8709753.2

(73) Patentinhaber : Gurit-Essex AG
CH-8807 Freienbach (CH)

(72) Erfinder : Saur, Wolfgang
Tafletenstrasse 5
CH-8863 Buttikon (CH)
Erfinder : Tonolla, Robert
Gattikonerstrasse 7
CH-8800 Thalwil (CH)
Erfinder : Taschke, Franz
Wildgansweg 24
W-7000 Stuttgart 50 (DE)
Erfinder : Staemmele, Siegfried
Brucknerstrasse 3
W-7057 Winnenden (DE)

(74) Vertreter : Rottmann, Maximilian R.
c/o Rottmann, Zimmermann + Partner AG
Glattalstrasse 37
CH-8052 Zürich (CH)

## Beschreibung

Die vorliegende Erfindung bezieht sich auf eine Einrichtung zum Dosieren und Mischen von mindestens zwei Reaktionskomponenten zur Bildung eines unmittelbar zum Gebrauch bestimmten Mehrkomponentenmittels nach dem Oberbegriff des Patentanspruches 1.

Somit weist die Einrichtung je eine Kartusche zur Aufnahme der Reaktionskomponenten mit verschiebbaren, kolbenartigen Einsätzen auf, die mit je einem Auspressorgan zusammenwirken. Die Kartuschen sind in Halteorganen untergebracht und stehen mit einer gemeinsamen, mit einer Auslassöffnung zur Entnahme des Mehrkomponentenmittels versehenen Mischvorrichtung in Verbindung. Zur Betätigung der Auspressorgane und der Mischvorrichtung ist mindestens ein Antrieb vorhanden. Ferner ist jede Kartusche über eine Verbindungsleitung mit der Mischvorrichtung verbunden, wobei die Kartuschen zusammen mit der Mischvorrichtung und den Verbindungsleitungen gemeinsam in die Einrichtung einfügbar und nach Gebrauch aus derselben entfernbar sind. Eine solche Einrichtung ist im DE-GM G 87 09 753.2 beschrieben. Dieses Dokument ist am 15.11.1987 im Patentblatt bekannt gemacht worden.

Im weiteren betrifft die Erfindung eine Kartuschenanordnung mit Mischvorrichtung zur Aufnahme je einer Reaktionskomponente, zum Gebrauch in einer Dosier- und Mischeinrichtung der oben erwähnten Art, wobei jede Kartusche mit einem kolbenartigen Einsatz und mit einem zum Anschluss an die Mischvorrichtung dienenden Austrittsstutzen versehen ist.

In bekannter Weise werden die Kartuschen einzeln in Betriebsbereitschaft gebracht und anschliessend in die Einrichtung eingesetzt. Dabei bildet die Entleerung der Kartuschen oft Schwierigkeiten. Die mit einem als Kolbenboden ausgebildeten Auspressorgan versehenen Kartuschen sind zusätzlich noch mit einer Membrane verschlossen, damit ein Luftzutritt während der Lagerung mit absoluter Sicherheit verhindert wird. Ein ungewollter Luftzutritt würde nämlich eine vorzeitige Reaktion des Kartuscheninhalts auslösen. Diese vor dem Kolbenboden angeordnete Membrane verhindert oder erschwert den Zugang zum Auspressorgan. Das andere Kartuschenende, welches mit einer Auslassöffnung versehen ist, muss ebenfalls bis zum Gebrauch luftdicht verschlossen bleiben. Um die Einrichtung in Einsatz zu bringen, ist es also notwendig, bei jeder Kartusche sowohl den zusätzlichen Membranverschluss an der Seite des kolbenartigen Einsatzes als auch den Verschluss am Auslassende der Kartusche zu öffnen. Dieses Vorgehen war insbesondere dann erschwert, wenn die Kartuschen zusammen mit der Mischvorrichtung und den Verbindungsleitungen eine Einheit bildeten, welche als solche in die Einrichtung einfügbar sind. In diesem Falle sind die beiden mit Membrane verschlossenen Enden der Kartuschen nicht oder nur schwer zugänglich, so dass oft der Anschluss der Verbindungsleitungen an die Kartuschen gelöst werden musste. Die Verwendung von aus den Kartuschen, aus den Verbindungsleitungen und der Mischvorrichtung gebildeten sogenannten Wegwerfeinheiten, die sonst sehr praktisch, sicher und arbeitssparend sind, war oft verunmöglicht.

Aus der DE-A-2 537 022 ist eine andere motorisch angetriebene Einrichtung bekannt geworden, die insbesondere zum Verkleben von Bauteilen oder zum Abdichten mittels eines Zweikomponentenmaterials Verwendung findet, wobei die Kartuschen, welche die miteinander zu vermischenden Komponenten enthalten, mit Hilfe von Auspressorganen entleert werden. Die Komponenten gelangen in ein gemeinsames Mischorgan, in welchem sie gründlich gemischt und in Reaktion gebracht werden, wonach die gebildete Klebemasse durch eine Auftragsdüse an die Verbrauchsstelle gelangt. Dabei müssen die Kartuschen einzeln in die Einrichtung eingesetzt werden, was die Gefahr von Verwechslungen mit sich bringt. Ausserdem müssen der Mischkopf und die Verbindungsleitungen separat montiert werden, was umständlich und zeitraubend ist.

Auch die in der FR-A-2 424 856 beschriebenen Kartuschen müssen vor Gebrauch in der Abgabevorrichtung zunächst manuell vorbereitet werden, z.B. durch Abschrauben eines Deckels (Fig. 6), was wiederum umständlich und zeitraubend ist. Aus der US-A-4 373 646 sind zwar selbstöffnende Verschlüsse für Kartuschen bekannt geworden ; diese weisen eine Mehrzahl von sternförmig angeordneten Schlitzen auf, wobei die so gebildeten Lappen in Ruhestellung, ohne dass Druck auf den Kartuscheninhalt ausgeübt wird, die Kartusche verschliessen sollen. Ein dichter Verschluss, der bei manchen Materialien erforderlich ist, kann aber auf diese Weise nicht realisiert werden.

Es ist die Aufgabe der vorliegenden Erfindung, eine Einrichtung zu schaffen, welche die erwähnten Nachteile nicht mehr aufweist, sondern in sehr einfacher und arbeitssparender Weise die Verwendung von aus den Kartuschen, den Verbindungsleitungen und der Mischvorrichtung gebildeten Einheiten erlaubt, wobei das Öffnen der Kartuschen am Austrittsende sowie gegebenenfalls das Öffnen und Entfernen des Sicherheitsabschlusses am anderen Ende der Kartusche, ohne zusätzliche Manipulationen, zuverlässig erreicht wird. Ferner soll vermieden werden, dass eine Verwechslung von Kartuschen seitens des Anwenders erfolgt, z.B. indem zwei Kartuschen mit gleichem Inhalt in die Einrichtung eingelegt werden.

Eine weitere Aufgabe der Erfindung besteht in der Schaffung einer Kartuschenanordnung mit Mischvorrichtung zur Aufnahme je einer Reaktionskomponente, zum Gebrauch in einer Dosier- und Mischeinrichtung der eingangs genannten Art, welche erlaubt, dass die Kartuschen, welche einen Teil der auswechselbaren Einheit bildet, unmittelbar zum Gebrauch zur Verfügung stehen oder gegebenenfalls vor dem Gebrauch lediglich noch durch die Entfernung des Aufreissdeckels betriebsbereit gemacht werden kann. Insbesondere wird so ermöglicht, dass das Auslassende der Kartuschen fest und ohne Zerstörung unlösbar mit je einer zur Mischeinrichtung führenden Leitung verbunden werden können.

Eine spezielle Manipulation am Austrittsende der Kartusche ist also nicht notwendig, bevor die Kartuschenanordnung in die Dosier- und Mischeinrichtung eingesetzt werden kann. Dies bringt noch den sehr grossen Vorteil mit sich, dass die verschiedenen Kartuschen fabrikmässig richtig mit der Mischvorrichtung verbunden werden können, so dass eine Verwechslung der Anschlüsse ausgeschlossen bleibt. Bei den bekannten Kartuschen war man genötigt, spezielle Anordnungen zur Vermeidung einer Verwechslung zu treffen. So war es üblich, Kartuschen und die zugehörigen Verbindungsleitungen durch übereinstimmende Farben zu kennzeichnen oder den richtigen Anschluss der Kartusche durch die Verwendung von Rechts- oder Linksgewinde zu sichern, um in dieser Weise eine Verwechslung möglichst auszuschliessen.

Zur Lösung dieser Aufgabe weist die erfindungsgemäss vorgeschlagene Kartuschenanordnung die im Anspruch 20 aufgeführten Merkmale auf. In dieser Weise wird die Verwendung von Einheiten ermöglicht, welche zweckmässigerweise nur für einen einzigen Einsatz bestimmt sind, aus den Kartuschen, den Verbindungsleitungen zwischen Kartuschen und einer Mischvorrichtung und aus der Mischvorrichtung bestehen und nach Gebrauch nicht mehr verwendet werden.

Ein wesentlicher Vorteil einer bevorzugten Ausführungsform, bei der sich sowohl das Austrittsende als auch das Ende beim kolbenartigen Einsatz mit einer unter Druckeinwirkung sich öffnenden Membran versehen sind, besteht darin, dass die Kartuschen, welche einen Teil der auswechselbaren Einheit bilden, nicht durch spezielle Manipulationen betriebsbereit gemacht werden müssen, da die sonst erforderliche Entfernung eines Aufreissdeckels wegfällt. Dazu sind entsprechende Verschlüsse vorgesehen, welche zweckmässigerweise als Membrane mit Sollbruchstelle ausgebildet sein können. Es ist aber auch möglich, den unter Druckeinwirkung zu öffnenden Verschluss am Auslassende der Kartuschen als Ventil auszubilden.

Gemäss einer bevorzugten Weiterbildung ist vorgesehen, dass zum Anschluss jeder Kartusche an die zugehörige Verbindungsleitung ein Kupplungsteil Verwendung findet, welches an seinem der Kartusche zugekehrten Ende mit einem Schneidelement ausgerüstet ist, gegenüber welchem die Kartusche in axialer Richtung verschiebbar angeordnet wird.

Weitere Ausgestaltungen und Weiterbildungen der Erfindungsgegenstände sind in den abhängigen Ansprüchen 2 bis 19 bezüglich der Dosier- und Mischvorrichtung und in den abhängigen Ansprüchen 21 bis 32 bezüglich der Kartuschenanordnung beschrieben.

Auf beiliegenden Zeichnungen sind Ausführungsbeispiele der Erfindung dargestellt, die im folgenden näher beschrieben werden. In den Zeichnungen zeigen :

Fig. 1   einen Teil der Dosier- und Mischeinrichtung mit der auswechselbaren Kartuschenanordnung, in schematischer Darstellung, gemäss einem ersten Ausführungsbeispiel ;

Fig. 2   eine zur Kartuschenanordnung gehörende Kartusche im Achsialschnitt, vergrössert dargestellt, gemäss einem ersten Ausführungsbeispiel ;

Fig. 3   eine Einzelheit zu Fig. 2, ebenfalls vergrössert dargestellt ;

Fig. 4   eine Seitenansicht eines Teils einer Dosier- und Mischvorrichtung sowie der zugeordneten Kartuschenanordnung, teilweise im Schnitt gezeichnet, gemäss einem zweiten Ausführungsbeispiel ;

Fig. 5   einen Axialschnitt durch ein Kupplungsteil, in vergrössertem Massstab gezeichnet ;

Fig. 6   eine Ansicht zu Fig. 5 in der Pfeilrichtung A gesehen ;

Fig. 7   ein Kupplungsteil mit angeschlossener Kartusche und Ausstosskolben, im wesentlichen im Axialschnitt ; und

Fig. 8   einen ähnlichen Schnitt wie Fig. 7, jedoch mit vorwärts bewegten Ausstosskolben.

Die vorgeschlagene Einrichtung dient zum Dosieren und Mischen von mindestens zwei Reaktionskomponenten, welche zur Bildung eines unmittelbar zum Gebrauch bestimmten Mehrkomponentenmittels zusammengeführt und in Reaktion gebracht werden sollen.

Die Einrichtung ist zweckmässigerweise als handgeführtes, motorisch angetriebenes Elektrowerkzeug ausgebildet und besitzt zur Aufnahme der beiden zu vermischenden Substanzen je eine Kartusche. Zur Aufnahme der Kartuschen sind Aufnahmetaschen vorgesehen, wobei jeder Aufnahmetasche ein Auspressglied zugeordnet ist, mittels welchem der Kartuscheninhalt aus der betreffenden Kartusche herausgepresst werden kann. Die Auspressglieder sind gemeinsam durch einen Motor mit Getriebe betätigbar, welcher Motor auch zum Antrieb der Mischvorrichtung dient.

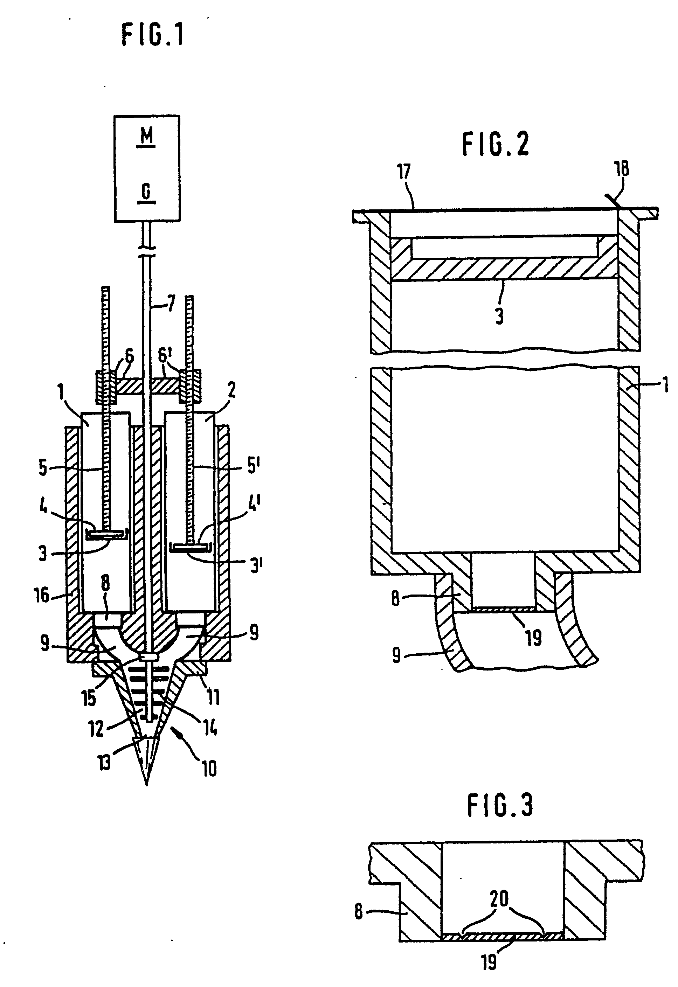

Gemäss der in der Fig. 1 dargestellten Ausführungsform ist zur Aufnahme von zwei Reaktionskomponenten eine Kartusche 1 sowie eine weitere Kartusche 2 vorgesehen. Mit Kartuschen werden hülsenförmige Behälter bezeichnet, in welchen solche einzelne Reaktionskomponenten Aufnahme finden, die zur Bildung eines unmittelbar zum Gebrauch bestimmten Mehrkomponentenmittels dienen. Aus der Darstellung der Kartuschen 1 und 2, welche in Schnitt gezeichnet sind, ist ersichtlich, dass zum Verschluss der Kartuschen je ein kolbenartiger Einsatz 3 bzw. 3' vorhanden ist, welche gleichzeitig zum Auspressen des zugehörigen Kartuscheninhalts dienen. Der kolbenartige Einsatz 3 steht unter Wirkung eines Auspressorganes 4, das auf einer verschiebbaren Zahnstange 5 angeordnet ist. Zur Betätigung der Zahnstange 5 ist ein Zahnstangenvortrieb 6 vorgesehen, welcher mittels einer Antriebswelle 7 betätigbar ist, die ihrerseits mit Hilfe eines Motors M über ein Getriebe G angetrieben wird. Diese Teile sind bekannt und brauchen nicht näher erläutert und dargestellt zu werden.

Das andere, dem kolbenartigen Einsatz 3 abgekehrte Ende der Kartusche 1 ist mit einem flanschförmigen Auslassende 8 zum festen Anschluss einer Verbindungsleitung 9 versehen, die zu einer Mischvorrichtung 10 führt.

Die Kartusche 2 ist genau gleich wie die Kartusche 1 ausgebildet, steht ebenfalls unter Einfluss eines kolbenartigen Einsatzes 3', der durch eine weitere Zahnstange 5' und ein Auspressglied 4' betätigbar ist. Jede der Zahnstangen 5, 5' wird mit Hilfe eines zugeordneten Zahnstangenvorschubgliedes 6, 6' von einer gemeinsamen Antriebswelle 7 angetrieben. Durch die Wahl von verschiedenen Zahnstangenvorschubgliedern 6, 6' oder durch den Einsatz von in der Steigung verschiedenen Zahnstangen 5, 5' können die kolbenartigen Einsätze 4, 4' mit ungleichem Vorschub betätigt werden, um in dieser Weise das Verhältnis der aus den Kartuschen 1 und 2 entnommenen Komponenten variabel zu halten.

Die Mischvorrichtung 10 weist einen Flanschteil 11 auf, an welchem die beiden Verbindungsleitungen 9 derart fest angeschlossen sind, dass die Verbindung ohne Zerstörung nicht gelöst werden kann, sowie einen Kammerteil 12, welcher konisch ausgebildet und mit einer Auslassöffnung 13 versehen ist.

Im Kammerteil 12 ist ein Rührer 14 drehbar gelagert. Der Rührer 14 ist mit zwei Mitnehmerbolzen ausgerüstet, welche sich aus der Mischvorrichtung nach oben erstrecken und mit welchen das zugekehrte Ende der Antriebswelle 7 lösbar verbunden werden kann. Zu diesem Zwecke ist die Antriebswelle mit einer Mitnehmerscheibe 15 ausgerüstet, die entsprechende Öffnungen besitzt, in welche die Mitnehmerbolzen eingreifen.

Die beiden Kartuschen 1 und 2, die Auslassenden 8, Verbindungsleitungen 9 sowie die für die Kartuschen gemeinsame Mischvorrichtung 10 bilden eine als auswechselbare Einheit ausgebildete Kartuschenanordnung einer Dosier- und Mischvorrichtung, die im wesentlichen Halteorgane 16 für die Kartuschen, den Antriebsmotor M mit Getriebe G, die Zahnstangen 5, 5', die Vorschubglieder 6, 6' sowie die Antriebswelle 7 umfasst. Die genannten Teile sind in einem gemeinsamen, aus der Zeichnung nicht ersichtlichen Gehäuse untergebracht, wobei die ganze Anordnung so getroffen ist, dass beim Einbringen der beiden Kartuschen 1, 2 in die Halteorgane 16 die Auspressorgane 4, 4' sowie die Antriebswelle 7 in Einsatz gebracht werden. Zu diesem Zwecke nimmt jede Kartusche 1 und 2 im Halteorgan 16 eine Stellung ein, in welcher sie gleichachsig zur Zahnstange 5 bzw. 5' ausgerichtet sind. Gleichzeitig befindet sich die Mischvorrichtung 10 in einer solchen Stellung, in welcher die Achse der Mischvorrichtung 10 in der Verlängerung der Achse der Antriebswelle 7 zu liegen kommt, so dass die Mitnehmerbolzen durch die Öffnungen der Mitnehmerscheibe 15 greifen.

Es ist wichtig, dass der Inhalt der Kartuschen 1 und 2 bis zum Gebrauch luftdicht verschlossen bleibt. Die Anordnung der kolbenbodenförmigen Einsätze 3, 3' in jeder Kartusche kann jedoch nicht eindeutig ausschliessen, dass bei der Lagerung der Kartuschen Luft in das Innere der Kartusche gelangt. Darüberhinaus ist es unbedingt notwendig, auch das Auslassende 8 der Kartusche 1, wo die Verbindungsleitung 9 fest angeschlossen ist, so zu verschliessen, dass auch von dieser Seite her keine Luft in die Kartusche eindringen kann. Um dieses Problem zu lösen, wird das Ende der Kartusche 1, wo der kolbenartige Einsatz 3 angeordnet ist, mit einem Aufreissdeckel 17 versehen, welcher eine Aufreissöse 18 aufweist. Das Auslassende 8 der Kartusche 1 ist mit einem Verschluss 19 versehen, welcher sich unter Druck öffnet. Besonders vorteilhaft ist es, wenn der Verschluss 19 als Membrane mit einer ringförmigen Nut 20 als Sollbruchstelle ausgebildet ist, wie dies aus Fig. 3 ersichtlich ist. Es wäre natürlich möglich, anstelle der Membrane 19 ein Ventil vorzusehen, welches bei einem gewissen Druck in der Kartusche geöffnet wird.

Die Kartuschen 1 und 2, die Verbindungsleitungen 9 sowie die gemeinsame Mischvorrichtung 10, welche Teile miteinander unlösbar verbunden sind, können zweckmässigerweise aus billigem Kunststoff hergestellt werden ; diese Teile müssen nach dem Einsatz nicht gereinigt werden, da sie eine Wegwerfeinheit bilden. Wird eine solche Einheit zum Gebrauch eingesetzt, so wird unmittelbar vor dem Einsatz der Aufreissdeckel 17 jeder Kartusche 1 bzw. 2 entfernt. Die genannte Einheit wird dann in die Einrichtung eingesetzt, so dass die Kartuschen 1 und 2 in den Halteorganen 16 Aufnahme finden. Dabei erfolgt die Ausrichtung der Zahnstangen 5, 5' mit Auspressorganen 4, 4' auf jeden der zugeordneten kolbenartigen Einsätze 3, 3' sowie die Ausrichtung der Antriebswelle 7 auf die Mitnehmerscheibe 15 des Rührers 14 zwangsläufig, so dass bei der Inbetriebnahme der Einrichtung die Auspressorgane 4, 4' und damit die kolbenbodenförmigen Einsätze 3, 3' in achsialer Rich-

EP 0 313 519 B1

tung verschoben werden, so dass in jeder der Kartuschen 1 bzw. 2 der Innendruck erhöht wird. Infolge dieser Druckerhöhung wird in jeder Kartusche 1, 2 der Verschluss 19 geöffnet, z.B. durch Bruch der Membrane an der vorgesehenen Sollbruchstelle, so dass die sich in den Kartuschen befindlichen Reaktionskomponenten durch die Leitungen 9 in die Mischvorrichtung 10 gepresst werden. Die Dosierung der einzelnen Komponenten kann durch die Wahl des Übersetzungsverhältnisses zum Antrieb der Zahnstangen 5, 5' vorausbestimmt werden.

Somit wird dafür Sorge getragen, dass die Kartuschen einwandfrei abgedichtet bleiben bis zum Moment, in welchem der Kartuscheninhalt in die Mischvorrichtung ausgestossen wird. Erst beim Einsetzen der Kartuschen in die Einrichtung werden die Aufreissdeckel 17 derselben mit Hilfe der Aufreissösen 18 abgerissen, wobei jedoch die kolbenartigen Einsätze 3 immer noch dichtend wirken. Anschliessend wird der Motor in Drehung gesetzt, so dass mit Hilfe der Zahnstangenvorschubglieder 6, 6' und der Zahnstangen 5, 5' die achsiale Verschiebung der am Ende jeder Zahnstange angeordneten Auspressorgane 4, 4' und der kolbenartigen Einsätze 3, 3' bewirkt wird. Bei diesem Vorgang ensteht in den Reaktionskomponenten, die sich in den Kartuschen 1 und 2 befinden, ein Überdruck, welcher zum Aufreissen des Verschlusses 19 jeder der Kartuschen 1 und 2 führt. Die Reaktionsmassen werden durch die Verbindungsleitungen 9 in die Mischvorrichtung 10 gefördert, wo eine gründliche Durchmischung der einzelnen Reaktionskomponenten erfolgt, wonach das fertige Produkt durch die Auslassöffnung 13 zur Auftragsstelle ausgestossen wird.

Nach dem Gebrauch der Einrichtung werden durch eine entgegengesetzte Drehung des Motors die Zahnstangen 5, 5' sowie die Antriebswelle 7 zurückgezogen, so dass die aus den Kartuschen 1 und 2, den Verbindungsleitungen 9 sowie dem Mischorgan 10 bestehende Einheit von den Halteorganen 16 entfernt werden kann. Die gebrauchte Einheit wird nicht mehr benötigt und kann vernichtet werden.

Zu einem neuen Einsatz wird eine neue Einheit in die Halteorgane 16 eingesetzt und wie beschrieben verwendet.

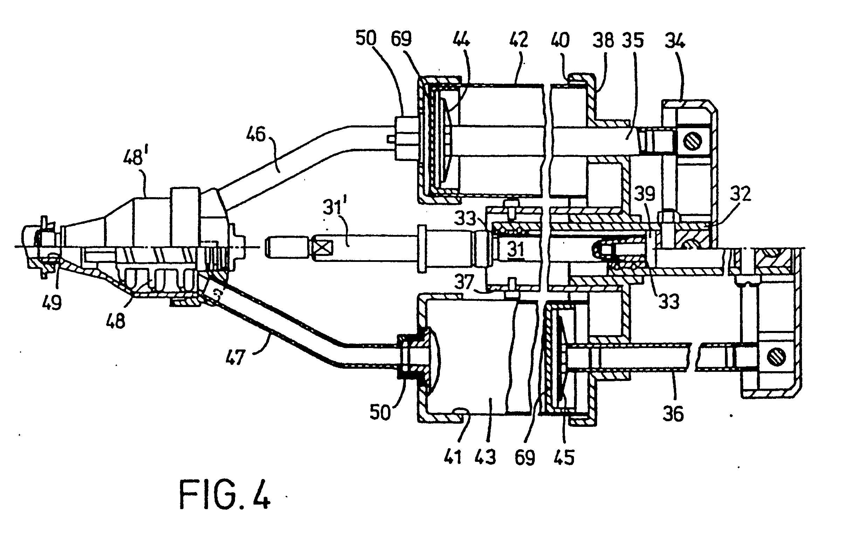

In den Fig. 4-8 ist ein weiteres Ausführungsbeispiel einer Einrichtung zum Dosieren und Mischen von mindestens zwei Reaktionskomponenten zur Bildung eines unmittelbar zum Gebrauch bestimmten Mehrkomponentenmittels dargestellt. Die Einrichtung weist gemäss Fig. 4 eine Gewindespindel 31 auf, welche drehbar in einem nicht dargestellten Getriebegehäuse gelagert und durch einen Elektromotor (nicht gezeigt) angetrieben ist. Die Gewindespindel 31 ist in einem Schlittenteil 32 untergebracht, das mit einer Spindelmutter 33 versehen ist, die im Innern des beispielweise aus Vierkant-Hohlprofil ausgebildeten Schlittenteils 32 angeordnet ist. Am anderen Ende des Schlittenteils 32 ist ein Träger 34 befestigt, in welchem die rückwärtigen Enden zweier nebeneinander liegender Ausstosskolbenstangen 35 und 36 gelagert sind. Das Schlittenteil 32 kann durch die Gewindespindel 31 über die Spindelmutter 33 axial bewegt werden, und zwar in einem aus einem Vierkant-Hohlprofil gebildeten Längsholm 37, welcher mit einer Führung 38 für die beiden Ausstosskolbenstangen 35 und 36 sowie für das Schlittenteil 32 versehen ist. An der rückwärtigen Stirnseite der Gewindespindel 31 ist ein Anschlag 39 vorgesehen, an welchem der Träger 34 in der vorderen Endlage des Schlittenteils 32 zur Anlage kommt.

Die Führung 38 wirkt mit Halteorganen 40 und 41 zusammen, in welchen zwei Kartuschen 42 und 43 Aufnahme finden. Die Kartuschen enthalten die miteinander zu mischenden Substanzen, z.B. je eine Komponente eines Zweikomponentenklebers. Dem Bodenteil jeder Kartusche 42 und 43 ist ein auf der betreffenden Kolbenstange 35 und 36 angebrachtes Auspressorgan 44 und 45 zugeordnet.

Der untere Teil der Fig. 4 mit Kartusche 43 zeigt die Ausgangsstellung, bevor der Antrieb eingeschaltet ist, in welcher das Auspressorgan 45 gegen den zugekehrten Kartuschenboden stösst, der selbst als Kolbenboden 69 ausgebildet ist und in der Kartusche 43 verschoben werden kann. Die Anordnung ist dabei so getroffen, dass jede Kartusche 42 und 43 in der zugehörigen, durch die Führung 38 und das Halteorgan 40 bzw. 41 gebildeten, Aufnahmekammer axial etwas verschiebbar ist, wie dies später näher erläutert wird. Die Halteorgane 40 und 41 weisen je ein Kupplungsteil 50 auf, welche Teile mit Hilfe von Verbindungsleitungen 46 und 47 an eine gemeinsame Mischvorrichtung 48 mit Mischerkopf 48' und Austrittsdüse 49 angeschlossen sind.

Bei einer Vorschubbewegung der Auspressorgane 44 und 45 wird der Inhalt der Kartuschen 42 und 43 in später beschriebener Weise durch die Verbindungsleitungen 46 und 47 in die Mischvorrichtung 48 gepresst. In der Fig. 4 ist unten die Ausgangsstellung des Auspressorgans 45 mit voller Kartusche 43 dargestellt, während der obere Teil der Fig. 4 die vorgeschobene Stellung des Auspressorgans 44 zeigt, nachdem der Inhalt der Kartusche 42 durch die Verbindungsleitung 46 in die Mischvorrichtung 48 gepresst wurde.

Gemäss der dargestellten Ausführung ist zwischen den Verbindungsleitungen 46, 47 und den entsprechenden Kupplungsteilen 50 eine für den Benützer unlösbare Verbindung vorhanden. Auch der Anschluss der Verbindungsleitungen 46 und 47 an die Mischvorrichtung 48 ist für den Benützer unlösbar ausgeführt, so dass die Mischvorrichtung 48 mit dem Mischerkopf 48', die Verbindungsleitungen 46, 47 mit den Kupplungsteilen 50 und die Kartuschen 42 und 43 zusammen eine kompakte, nur in ihrer Gesamtheit auswechselbare Einheit bilden.

5

Es sei ferner erwähnt, dass zum Antrieb der Mischvorrichtung 48 ein Wellenzapfen 31' dient, welcher mit der Gewindespindel 31 in Verbindung steht, so dass die Mischvorrichtung 48 bei der Bewegung des Schlittenteils 32 über die Spindelmutter 33 ebenfalls angetrieben wird.

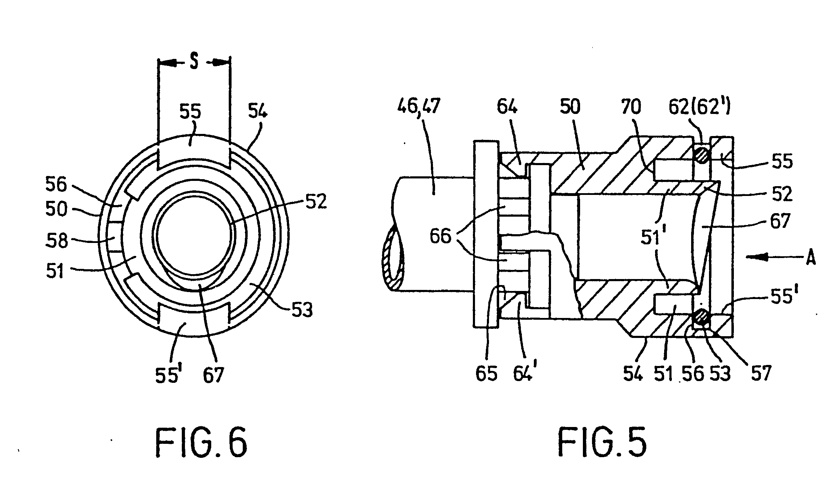

In den Fig. 5 und 6 ist die nähere Ausbildung des Kupplungsteils 50 ersichtlich. Das Kupplungsteil 50 ist vorzugsweise als Rohrkörper aus Kunststoff ausgebildet und weist auf der einen Stirnseite eine in die Wandung des Rohrkörpers ringförmig eingelassene Nut auf, die als Eintauchkammer 51 ausgebildet ist. Die die Eintauchkammer 51 begrenzende Innenwand 51' ist bezüglich der Rohrachse schräg abgeschnitten und als Schneidelement 52 ausgebildet, das eine Schneidkante 67 aufweist. Die Aussenwand 54 der Eintauchkammer 51 überragt nach aussen die Innenwand 51' und ist mit nockenförmigen Ansätzen 55 bzw. 55' versehen, die diametral einander gegenüber angeordnet sind und eine weitere Nut 57 begrenzen, in welcher ein ringförmiges Halteglied 53 Aufnahme findet. Das Halteglied 53 ist vorzugsweise als Federring ausgebildet, wobei die nockenförmigen Einsätze 55, 55' eine Axialverschiebung des Halteglieds 53 verhindern. Eine bundförmige Anschlagfläche 56 begrenzt weiter die Nut 57.

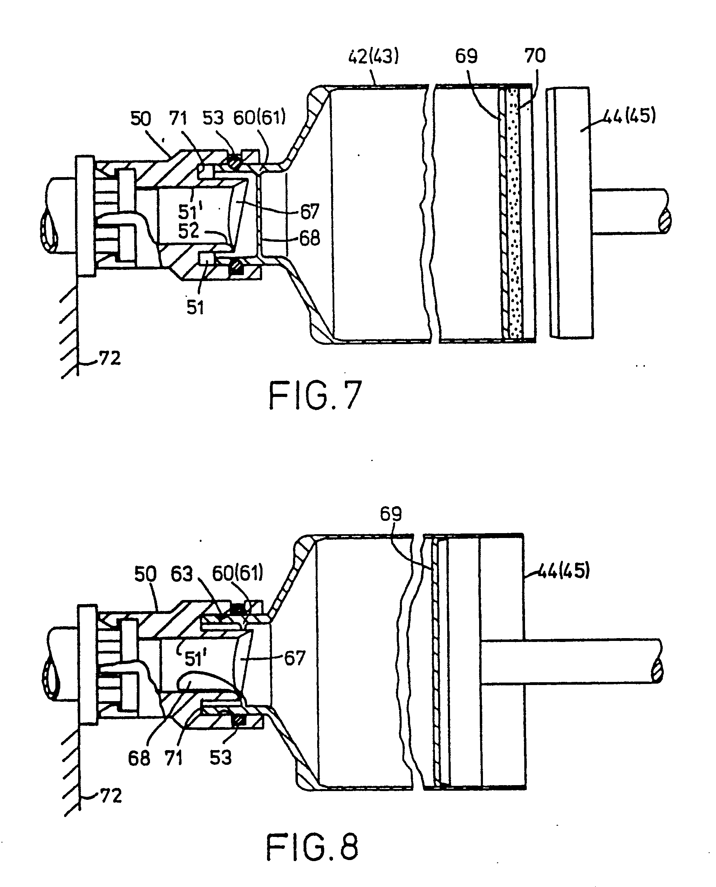

Aus der Fig. 6 ist ersichtlich, dass sich die Ansätze 55, 55' in Umfangsrichtung über die Länge S erstrecken, wobei eine Nase 58 eine Umlaufbewegung des Federrings verhindert und diesen gleichzeitig gegen Herausfallen sichert. Damit der Federring beim Aufsetzen des Kupplungsteils 50 auf den Austritts-, bzw. Anschlussstutzen 60 bzw. 61 der Kartuschen radial nach aussen ausweichen kann, sind in seiner Wandung hinter den nockenförmigen Ansätzen 55 und 55' schlitzförmige Durchbrüche 62, 62' angeordnet, deren Ausdehnung in Umfangsrichtung etwa derjenigen der nockenförmigen Ansätze 55, 55' entspricht. In diese Schlitze kann das Halteglied 53 bei entsprechender radialer Beanspruchung ausweichen. Im Kupplungsfalle greift das Halteglied 53 in eine Umfangsnut 63 im Austrittsstutzen 60 bzw. 61 (Fig. 8) ein.

Die Verbindung des Kupplungsteils 50 mit der zugeordneten Verbindungsleitung 46 oder 47 ist aus den Fig. 5, 7 und 8 ersichtlich, wobei nachstehend auf Fig. 5 Bezug genommen wird. Das Kupplungsteil 50 ist an seinem der Verbindungsleitung 46 bzw. 47 zugewandten Ende mit federnden Zungen 64 ausgerüstet, die radial nach innen ragende Klinken 64' besitzen, die im Kupplungsfall mit der entsprechenden zur Mischvorrichtung 48 führenden Verbindungsleitungen 46 und 47 verbunden werden, indem die Klinken 64' in eine Umfangsnut 65 am Ende der Verbindungsleitung 46 oder 47 eingreifen. Durch zwei Anschläge 66 in der Umfangsnut 65 ist das Kupplungsteil 50 gegen Verdrehen gesichert.

In den Fig. 7 und 8 ist ferner je einer Kartusche 42 bzw. 43 dargestellt, welche am Auslassende im Bereiche des Austrittsstutzens 60 bzw. 61 mit einer Verschlussmembrane 68 versehen sind. Die Anordnung ist jetzt so getroffen, dass die in der Fig. 7 dargestellte Kartusche 42 in der durch das Halteglied 53 gesicherten Ausgangslage gegenüber dem Kupplungsteil 50 etwas in axialer Richtung verschiebbar ist, indem in der Eintauchkammer 51, welche den Austrittsstutzen 60 bzw. 61 aufnimmt, noch etwas Platz zur axialen Verschiebung des Stutzens verbleibt. Wird jetzt die Gewindespindel 31 in Drehung versetzt und gleichzeitig die Mischvorrichtung 48 über den Wellenzapfen 31' der Gewindespindel 31 in Betrieb gesetzt, so laufen die beiden Auspressorgane 44 und 45 auf den axial verschiebbaren Boden 69 der Kartuschen 42 und 43, bzw. auf eine dem Boden 69 vorgelagerte Membrane 70 auf, wobei die letztere zerstört wird. Zwischen der Membrane 70 und dem Kolbenboden 69 ist ein Feuchtigkeit aufnehmender Stoff vorhanden. Gleichzeitig führt jede der beiden Kartuschen 42 und 43 gegenüber dem unverschiebbaren Kupplungsteil 50 eine Axialbewegung aus, nachdem die Halteglieder 53 radial verdrängt wurden. Bei der Achsialbewegung der Kartusche 42 oder 43 wird die Verschlussmembrane 68 im Austrittsstutzen 60, 61 von der Schneidkante 67 des Schneidelements 52 aufgeschnitten. Diese Stellung ist aus der Fig. 8 ersichtlich. Der Ringboden 71 der Eintauchkammer 51 des Kupplungsstücks 50 bildet bei der Achsialbewegung der Kartusche eine Hubbegrenzung. Unter dem Druck der auszupressenden Substanz wird die Verschlussmembrane 68 scharnierartig gegen die Innenwandung des Kupplungsteils 50 gebogen, so dass der Austrittsstutzen 60 frei wird und die in der Kartusche befindliche Substanz praktische ungehindert herausgepresst werden kann. Die Umfangslänge und Ausgestaltung der Schneide 67 des Schneidelements 52 ist den jeweiligen Gegebenheiten entsprechend zu wählen, wobei sich eine Umfangslänge um 60-100° der Schneidkante als zweckmässig erwiesen hat.

Die Kupplung 50 stützt sich bei dieser Bewegung an einen in den Fig. 7 und 8 angedeuteten und mit 72 bezeichneten Gestellteil ab und ist somit unverschiebbar.

Gemäss der dargestellten und beschriebenen Ausführung war die Kartusche 42 an der Auslassseite mit einer Verschlussmembrane 68 versehen, die im Austrittsstutzen 60 angeordnet war und einen luftdichten Abschluss für den Kartuscheninhalt bildete. Das Aufreissen der Membrane erfolgte durch eine axiale Bewegung der Kartusche 42 gegen das Schneidelement 52, welches im ortsfesten Kupplungsteil 50 eingesetzt war.

Eine andere Möglichkeit besteht im Rahmen der Erfindung darin, dass anstelle der Membrane 68 eine ebensolche, aber mit einer Sollbruchstelle ausgebildete Membrane eingesetzt wird, welche dann bei einer unter Einwirkung des Ausstosskolbens 44 erfolgten Erhöhung des Drucks in der Kartusche bricht und das Ausströmen des Kartuscheninhalts durch das Kupplungsteil 50 und durch die Verbindungsleitung 46 in die Mischvorrichtung 48 ermöglicht.

Eine weitere Möglichkeit besteht darin, dass die Membrane 70 (Fig. 7), welche die Kartusche 42 auf der Seite des Ausstosskolbens 44 abschliesst, als Membrane mit Sollbruchstelle ausgebildet wird, welche dann unter Wirkung des zugehörigen Ausstosskolbens 44 zerstört wird, so dass der Kolben 44 direkt auf den kolbenbodenartigen Einsatz 69 der Kartusche 42 einwirkt. Die erwähnte Sollbruchstelle kann durch eine ringförmige Nut gebildet werden.

Gemäss einer Variante im Rahmen der Erfindung wird der unter Druck sich öffnende Verschluss am Auslassende der Kartusche 42 als Ventil ausgebildet, welches in den Austrittsstutzen 60 eingesetzt wird. Das Öffnen des Ventils erfolgt beim Überschreiten eines gewissen Grenzdrucks, welcher je nach Inhalt der Kartusche und je nach Betriebsbedingungen festgesetzt und durch entsprechende Dimensionierung einer Ventilfeder bestimmt wird.

Bei der in der Zeichnung dargestellten Ausführung erfolgt die Zerstörung der Membrane 68 durch eine axiale Verschiebung der Kartusche. Eine weitere Ausbildung dieser Ausführung kann darin bestehen, dass die Kartusche unter Wirkung des Ausstosskolbens nicht nur Axialbewegung ausführt, sondern neben der Verschiebung in Drehung versetzt wird. Es entsteht eine spiralförmige Bewegung gegenüber einem im Kupplungsteil 50 angeordneten Schneidorgan, welches dabei ein vollständiges Durchtrennen der Membrane 68 bewirkt.

Bei allen beschriebenen Ausführungen wird ermöglicht, aus den Kartuschen, den Kupplungsteilen und Verbindungsleitungen, zusammen mit der Mischvorrichtung, eine kompakte Einheit zu bilden, in welcher das Auftrennen der luftdicht verschlossenen Kartuschen automatisch vor sich geht, so dass der Benützer keinerlei Manipulationen ausführen muss.

Die in den Fig. 4 bis 8 dargestellte und vorstehend erläuterte besondere Ausführungsform bietet eine bevorzugte Lösung, bei welcher die in den Kartuschen untergebrachten Reaktionskomponenten in luftdicht verschlossenen Kartuschen mehrfach gesichert untergebracht sind, und bei welcher das Auftrennen und Entleeren der Kartusche gleichzeitig mit der Inbetriebnahme des Mischorgans in vollautomatischer Weise erfolgt, so dass jegliche Fehlmanipulation seitens des Benützers praktisch ausgeschlossen bleibt.

Zusammenfassend können durch die Erfindung die folgenden Vorteile erreicht werden :

1. Das mühsame Anschliessen der Kartuschen an die Verbindungsleitungen fällt weg, so dass die Gefahr der Verwechslung der Anschlüsse nicht mehr besteht. Eine spezielle Kennzeichnung der Leitungen und der Kartuschen ist also nicht notwendig.

2. Die Reinigung der Verbindungsleitungen und der Mischvorrichtung entfällt, da diese Teile nur einmal gebraucht werden.

3. Die Anordnung eines unter mechanischer Krafteinwirkung, insbesondere unter Druckeinwirkung öffnenden Verschlusses am Auslassende und/oder an der Seite des kolbenartigen Einsatzes der Kartuschen garantiert die Haltbarkeit des Kartuscheninhalts auf unbeschränkte Zeit und ermöglicht, dass eine fertige Einheit mit fest angeschlossenen Verbindungsleitungen verwendet werden kann. Der auslaßseitige, gegebenenfalls auch der hintere Verschluss wird automatisch durch mechanische Druckeinwirkung oder Staudruck geöffnet und bedarf keinerlei Manipulation seitens des Benutzers.

Es muss insbesondere berücksichtigt werden, dass bei den bestehenden Einrichtungen keine solchen als Kartuschenanordnung ausgebildete Einheiten bekannt waren, bei welchen jede Kartusche mit einer fest angeschlossenen Schlauchleitung versehen war, welche zu einer ebenfalls fest angeschlossenen gemeinsamen Mischvorrichtung führt. Bei den bestehenden Einrichtungen war es immer notwendig, das Auslassende jeder Kartusche vor dem Gebrauch durch den Benutzer zu öffnen. Nachdem das Auslassende der Kartusche geöffnet war, erfolgte der Anschluss an die Mischvorrichtung durch eine Verbindungsleitung. Um Verwechslungen beim Anschliessen zu vermeiden, war es notwendig, die Kartuschen und die zugehörigen Leitungen mit entsprechenden Kennzeichnungen zu versehen. Diesbezüglich bringt die beschriebene Einrichtung eine sehr wesentliche Vereinfachung und einen bedeutsamen Fortschritt.

## Patentansprüche

1. Einrichtung zum Dosieren und Mischen von mindestens zwei Reaktionskomponenten zur Bildung eines unmittelbar zum Gebrauch bestimmten Mehrkomponentenmittels, welche Einrichtung je eine Kartusche (1, 2; 42, 43) zur Aufnahme der Reaktionskomponenten mit verschiebbaren, kolbenartigen Einsätzen (3, 3' ; 69) aufweist, die mit je einem Auspressorgan (4, 4' ; 44, 45) zusammenwirken und bei welcher Einrichtung die Kartuschen (1, 2 ; 42, 43) in Halteorganen (16 ; 40, 41) untergebracht sind und mit einer gemeinsamen, mit einer Auslassöffnung (13 ; 49) zur Entnahme des Mehrkomponentenmittels versehenen Mischvorrichtung (10 ; 48) in Verbindung stehen, wobei zur Betätigung der Auspressorgane (4, 4' ; 44, 45) und der Mischvorrichtung (10; 48) mindestens ein Antrieb (31, 31') vorhanden ist, wobei jede Kartusche (1, 2 ; 42, 43) über eine Verbindungsleitung (9 ; 46, 47) mit der Mischvorrichtung (10 ; 48) in Verbindung steht, und wobei die Kartuschen (1, 2 ; 42, 43) zusammen mit der Mischvorrichtung (10 ; 48) und den Verbindungsleitungen (9 ; 46, 47) gemeinsam in die Einrichtung einfügbar und nach Gebrauch aus derselben entfernbar sind, dadurch gekennzeichnet, dass die Kartuschen (1, 2 ; 42, 43) zusammen mit den Verbindungsleitungen (9 ; 46, 47) und mit der Mischvorrichtung (10 ; 48) eine ohne Zerstörung untrennbare Einheit bilden, und dass jede Kartusche (1, 2 ; 42, 43) am Auslassende sowie gegebenenfalls an der Seite des kolbenartigen Einsatzes (3, 3' ; 69) einen Verschluss (19 ; 68, 70) aufweist, der bei mechanischer Krafteinwirkung durch den Antrieb der Vorrichtung auf die Kartusche (1, 2 ; 42, 43) selbsttätig öffnet.

2. Einrichtung nach Patentanspruch 1, dadurch gekennzeichnet, dass am Auslassende und/oder an der Seite des kolbenartigen Einsatzes (3, 3' ; 69) der Kartuschen (1, 2 ; 42, 43) ein unter Druckeinwirkung öffnender Verschluss (70) vorgesehen ist.

3. Einrichtung nach Anspruch 2, dadurch gekennzeichnet, dass der unter Druckeinwirkung öffnende Verschluss (19 ; 68) am Auslassende der Kartusche (1, 2 ; 42, 43) als Membrane mit Sollbruchstelle ausgebildet ist, die bei einer Druckerhöhung in der Kartusche (1, 2 ; 42, 43) den Durchgang durch den Austrittsstutzen (8; 60, 61) derselben freigibt.

4. Einrichtung nach Anspruch 2, dadurch gekennzeichnet, dass der an der Seite des kolbenartigen Einsatzes (69) angeordnete Verschluss als Membrane (70) mit Sollbruchstelle ausgebildet ist, die bei Druckbeaufschlagung den Zugang zum kolbenartigen Einsatz (69) freigibt.

5. Einrichtung nach Anspruch 3 oder 4, dadurch gekennzeichnet, dass die Sollbruchstelle durch eine ringförmige Nut (20) gebildet ist.

6. Einrichtung nach Anspruch 2, dadurch gekennzeichnet, dass der unter Druckeinwirkung zu öffnende Verschluss am Auslassende der Kartusche (1, 2 ; 42, 43) als Ventil ausgebildet ist.

7. Einrichtung nach Anspruch 1, dadurch gekennzeichnet, dass der Verschluss am Auslassende der Kartusche (42, 43) als Membrane (68) ausgebildet ist und im Wirkungsbereich einer Vorrichtung (52, 67) zum Durchbrechen der Membrane (68) liegt, welche Vorrichtung am kartuschenseitigen Ende der Verbindungsleitung (46, 47) angeordnet ist.

8. Einrichtung nach Anspruch 7, dadurch gekennzeichnet, dass die zwischen der Kartusche (42, 43) und der Mischvorrichtung (48) angeordnete Verbindungsleitung (46, 47) und die zugeordnete Kartusche (42, 43) relativ zueinander beweglich sind.

9. Einrichtung nach Anspruch 8, dadurch gekennzeichnet, dass die Kartusche (42, 43) gegenüber der Vorrichtung (52, 67) zum Durchbrechen der Membrane (68) in Richtung der Kartuschen-Längsachse axial verschiebbar angeordnet ist.

10. Einrichtung nach Anspruch 8 oder 9, dadurch gekennzeichnet, dass eine im Austrittsstutzen (60) der Kartusche (42, 43) befindliche Verschlussmembran (68), ein am Austrittsstutzen (60) der Kartusche (42, 43) angeschlossener Kupplungsteil (50) und ein am letzteren angebrachtes Schneidelement (52) vorgesehen sind, derart, dass durch die Relativbewegung zwischen der Kartusche (42, 43) und dem Kupplungsteil (50) die Verschlussmembran (68) wenigstens in einem solchen Ausmass aufgetrennt wird, dass sie infolge des zu Beginn des Auspressvorgangs durch die in der Kartusche befindliche Substanz auf sie ausgeübten Druckes die Strömungsbahn für diese Substanz ganz oder teilweise freigibt.

11. Einrichtung nach Anspruch 8, dadurch gekennzeichnet, dass die Kartusche (42, 43) gegenüber der Vorrichtung (52, 67) zum Durchbrechen der Membrane verdrehbar angeordnet ist.

12. Einrichtung nach Anspruch 8, dadurch gekennzeichnet, dass die Mischvorrichtung (48) sowie die Verbindungsleitungen (46, 47) zu den Kartuschen (42, 43) in der Einrichtung unverschiebbar, die Kartuschen (42, 43) jedoch in Richtung der Kartuschen-Längsachse beweglich in den Halteorganen (40, 41) der Einrichtung aufgenommen sind.

13. Einrichtung nach Anspruch 8, dadurch gekennzeichnet, dass jede Verbindungsleitung (46, 47) am der Kartusche (42, 43) zugekehrten Ende ein Kupplungsteil (50) aufweist, welches mit dem zugeordneten Halteorgan (40, 41) zur Aufnahme der Kartusche (42, 43) in Verbindung steht und die Vorrichtung (52, 67) zum Durchbrechen der Membrane (68) beinhaltet.

14. Einrichtung nach Anspruch 13, dadurch gekennzeichnet, dass das Kupplungsteil (50) als Rohrkörper ausgebildet ist und einerends eine in die Wandung des Rohrkörpers von der Stirnseite her eingelassene Nut aufweist, die als Eintauchkammer (51) zur verschiebbaren Aufnahme des zugehörigen Austrittsstutzens (50) der Kartusche ausgebildet ist.

15. Einrichtung nach Anspruch 14, dadurch gekennzeichnet, dass die die Eintauchkammer (51) begrenzende Innenwand (51') als Schneidelement (52) mit Schneidkante (67) ausgebildet ist.

16. Einrichtung nach Anspruch 1, dadurch gekennzeichnet, dass die Mischvorrichtung (48) und die Auspressorgane (44, 45) von einem gemeinsamen Antriebsmotor und einem diesem nachgeschalteten Getriebe angetrieben sind.

17. Einrichtung nach Anspruch 1, dadurch gekennzeichnet, dass zwischen dem kolbenartigen Einsatz (69) der Kartusche (42, 43) und dem Auspressorgan (44, 45) derselben eine Membrane (70) angeordnet ist, welche beim Einsatz des Auspressorgans (44, 45) zerstört wird.

18. Einrichtung nach Anspruch 1, dadurch gekennzeichnet, dass jede Kartusche (1, 2) am Ende des kolbenartigen Einsatzes (3, 3') mit einem Aufreissdeckel (17) versehen ist.

19. Einrichtung nach Anspruch 17 oder 18, dadurch gekennzeichnet, dass zwischen der Membrane (70) bzw. dem Aufreissdeckel (17) und dem kolbenartigen Einsatz (69 bzw. 3,3') ein Feuchtigkeit aufnehmender Stoff vorhanden ist.

20. Kartuschenanordnung mit Mischvorrichtung zur Aufnahme je einer Reaktionskomponente, zum Gebrauch in einer Dosier- und Mischeinrichtung nach dem Patentanspruch 1, wobei jede Kartusche (1, 2 ; 42, 43) mit einem kolbenartigen Einsatz (3, 3' ; 69) und mit einem zum Anschluss an die Mischvorrichtung (10 ; 48) dienenden Austrittsstutzen (8 ; 60, 61) versehen ist, dadurch gekennzeichnet, dass jede Kartusche (1, 2 ; 42, 43) mit der zugeordneten Verbindungsleitung (9 ; 46, 47) und mit der Mischvorrichtung (10 ; 48) ohne Zerstörung untrennbar verbunden ist, und dass jede Kartusche (1, 2 ; 42, 43) am Auslassende sowie gegebenenfalls an der Seite des kolbenartigen Einsatzes (3, 3' ; 69) einen Verschluss (19 ; 68, 70) aufweist, der bei mechanischer Krafteinwirkung auf die Kartusche selbsttätig öffnet.

21. Kartuschenanordnung nach Anspruch 20, dadurch gekennzeichnet, dass jede der Kartuschen (1, 2 ; 42, 43) am Auslassende mit einem unter Druck sich selbsttätig öffnenden Verschluss (19 ; 68) versehen ist.

22. Kartuschenanordnung nach Anspruch 20 oder 21, dadurch gekennzeichnet, dass der Verschluss am Auslassende der Kartuschen (1, 2 ; 42, 43) als Membrane (19 ; 68) mit Sollbruchstelle ausgebildet ist, die bei einer Druckerhöhung in der Kartusche (1, 2 ; 42, 43) den Durchgang durch den Austrittsstutzen (8 ; 60, 61) derselben freigibt.

23. Einrichtung nach Anspruch 20, dadurch gekennzeichnet, dass der an der Seite des kolbenartigen Einsatzes (69) angeordnete Verschluss als Membrane (70) mit Sollbruchstelle ausgebildet ist, die bei Druckbeaufschlagung den Zugang zum kolbenartigen Einsatz (69) freigibt.

24. Einrichtung nach Anspruch 22 oder 23, dadurch gekennzeichnet, dass die Sollbruchstelle durch eine ringförmige Nut (20) gebildet ist.

25. Einrichtung nach Anspruch 20, dadurch gekennzeichnet, dass der unter Druckeinwirkung zu öffnende Verschluss am Auslassende der Kartusche als Ventil ausgebildet ist.

26. Einrichtung nach Anspruch 20, dadurch gekennzeichnet, dass der Verschluss am Auslassende der Kartusche (42, 43) als Membrane (68) ausgebildet ist und im Wirkungsbereich einer Vorrichtung (52, 67) zum Durchbrechen der Membrane (68) liegt, welche Vorrichtung (52, 67) am kartuschenseitigen Ende der zugeordneten Verbindungsleitung (46, 47) angeordnet ist.

27. Einrichtung nach Anspruch 26, dadurch gekennzeichnet, dass die zwischen der Kartusche (42, 43) und der Mischvorrichtung (48) angeordnete Verbindungsleitung (46, 47) und die zugeordnete Kartusche (42, 43) relativ zueinander beweglich sind.

28. Einrichtung nach Anspruch 27, dadurch gekennzeichnet, dass jede Kartusche (42, 43) gegenüber der zugeordneten Vorrichtung (52, 67) zum Durchbrechen der Membrane (68) in Richtung der Kartuschen-Längsachse axial verschiebbar ist.

29. Einrichtung nach Anspruch 26, dadurch gekennzeichnet, dass jede Kartusche (42, 43) gegenüber der zugeordneten Vorrichtung (52, 67) zum Durchbrechen der Membrane (68) verdrehbar ist.

30. Einrichtung nach Anspruch 20, dadurch gekennzeichnet, dass am Ende der Kartuschen (42, 43), hinter dem kolbenartigen Einsatz (69) der Kartuschen, eine Membrane (70) angeordnet ist, welche beim Einsatz einer in Kartuschenlängsachse wirkenden Druckkraft zerstört wird.

31. Einrichtung nach Anspruch 20, dadurch gekennzeichnet, dass am Ende der Kartuschen (1, 2), hinter dem kolbenartigen Einsatz (3, 3'), ein Aufreissdeckel (17) vorgesehen ist.

32. Einrichtung nach Anspruch 30 oder 31, dadurch gekennzeichnet, dass zwischen der Membrane (70) bzw. dem Aufreissdeckel (17) und dem kolbenartigen Einsatz (3, 3' bzw. 69) ein Feuchtigkeit aufnehmender Stoff vorhanden ist.

## Claims

1. Device for dosing and mixing at least two reaction components for the formation of a multi-component agent intended for immediate use, which device respectively comprises a cartridge (1, 2 ; 42, 43) for receiving the reaction components with displaceable, piston-like inserts (3, 3' ; 69), which cooperate respectively with an ejection member (4, 4' ; 44, 45) and in which device the cartridges (1, 2 ; 42, 43) are disposed in support members (16 ; 40, 41) and are connected to a common mixing apparatus (10 ; 48) provided with an outlet opening (13 ; 49) for removing the multi-component agent, at least one drive (31, 31') being provided for actuating the ejection members (4, 4' ; 44, 45) and the mixing apparatus (10 ; 48), each cartridge (1, 2 ; 42, 43) being connected by way of a connecting pipe (9 ; 46, 47) to the mixing apparatus (10 ; 48), and the cartridges (1, 2; 42, 43) together with the mixing apparatus (10 ; 48) and the connecting pipes (9 ; 46, 47) being able to be inserted jointly in the device and being able to be removed therefrom after use, characterised in that the cartridges (1, 2 ; 42, 43) together with the connecting pipes (9 ; 46, 47) and with the mixing apparatus (10 ; 48) form a unit which cannot be separated without being destroyed, and that at the outlet end and possibly on the side of the piston-like insert (3, 3' ; 69), each cartridge (1, 2 ; 42, 43) comprises a closure member (19 ; 68, 70), which opens automatically in the case of the mechanical application of force by the drive of the apparatus on the cartridge (1, 2 ; 42, 43).

2. Device according to Patent Claim 1, characterised in that a closure member (70) opening under the action of force is provided at the outlet end and/or on the side of the piston-like insert (3, 3' ; 69) of the cartridges (1, 2 ; 42, 43).

3. Device according to Claim 2, characterised in that the closure member (19 ; 68) opening under the action of pressure, at the outlet end of the cartridge (1, 2 ; 42, 43), is constructed as a membrane with a predetermined breaking point, which at the time of an increase in pressure in the catridge (1, 2 ; 42, 43) opens the passage through the outlet connection (8 ; 60, 61) thereof.

4. Device according to Claim 2, characterised in that the closure member located on the side of the piston-like insert (69) is constructed as a membrane (70) with a predetermined breaking point, which upon the application of pressure allows access to the piston-like insert (69).

5. Device according to Claim 3 or 4, characterised in that the predetermined breaking point is formed by an annular groove (20).

6. Device according to Claim 2, characterised in that the closure member at the outlet end of the cartridge (1, 2 ; 42, 43), to be opened under the action of pressure, is constructed as a valve.

7. Device according to Claim 1, characterised in that the closure member at the outlet end of the cartridge (42, 43) is constructed as a membrane (68) and lies in the range of action of an apparatus (52, 67) for perforating the membrane (68), which apparatus is located at the end of the connecting pipe (46, 47) adjacent the cartridges.

8. Device according to Claim 7, characterised in that the connecting pipe (46, 47) located between the cartridge (42, 43) and the mixing apparatus (48) and the associated cartridge (42, 43) are movable relative to each other.

9. Device according to Claim 8, characterised in that the cartridge (42, 43) is arranged to move axially in the direction of the longitudinal axis of the cartridges, with respect to the apparatus (52, 67) for perforating the membrane (68).

10. Device according to Claim 8 or 9, characterised in that a closure membrane (68) located in the outlet connection (60) of the cartridge (42, 43), a coupling part (50) connected to the outlet connection (60) of the cartridge (42, 43) and a cutting member (52) located on the latter are provided so that due to the relative movement between the cartridge (42, 43) and the coupling part (50), the closure membrane (68) is perforated at least to such an extent that as a result of the pressure exerted thereon at the beginning of the ejection operation, by the substance located in the cartridge, it completely or partly opens the flow path for this substance.

11. Device according to Claim 8, characterised in that the cartridge (42, 43) is arranged to rotate with respect to the apparatus (52, 67), for perforating the membrane.

12. Device according to Claim 8, characterised in that the mixing apparatus (48) and the connecting lines (46, 47) to the cartridges (42, 43) are not able to move in the device, however the cartridges (42, 43) are received in the support members (40, 41) of the device so that they can move in the direction of the longitudinal axis of the cartridges.

13. Device according to Claim 8, characterised in that at the end facing the cartridge (42, 43), each connecting pipe (46, 47) comprises a coupling part (50), which is connected to the associated support member (40, 41) for receiving the cartridge (42, 43) and contains the apparatus (52, 67) for perforating the membrane (68).

14. Device according to Claim 13, characterised in that the coupling part (50) is constructed as a tubular member and at one end comprises a groove let into the wall of the tubular member from the end face, which groove is constructed as an insertion chamber (51) for slideably receiving the associated outlet connection (50) of the cartridge.

15. Device according to Claim 14, characterised in that the inner wall (51') defining the insertion chamber (51) is constructed as a cutting member (52) with a cutting edge (67).

16. Device according to Claim 1, characterised in that the mixing apparatus (48) and the ejection members (44, 45) are driven by a common drive motor and a transmission following the latter.

17. Device according to Claim 1, characterised in that located between the piston-like insert (69) of the cartridge (42, 43) and the ejection member (44, 45) thereof is a membrane (70), which is destroyed at the time of use of the ejection member (44, 45).

18. Device according to Claim 1, characterised in that each cartridge (1, 2) is provided with a tear-off cap (17) at the end of the piston-like insert (3, 3').

19. Device according to Claim 17 or 18, characterised in that a material absorbing moisture is provided between the membrane (70) or the tear-off cap (17) and the piston-like insert (69 or 3, 3').

20. Arrangement of cartridges with a mixing apparatus for respectively receiving a reaction component, for use in a dosing and mixing device according to Patent Claim 1, each cartridge (1, 2 ; 42, 43) being provided with a piston-like insert (3, 3' ; 69) and with an outlet connection (8 ; 60, 61) serving for connection to the mixing device (10 ; 48), characterised in that each cartridge (1, 2 ; 42, 43) is connected to the associated connecting pipe (9 ; 46, 47) and to the mixing device (10 ; 48) so that it cannot be separated without being destroyed and that at the outlet end and possibly on the side of the piston-like insert (3, 3' ; 69), each cartridge (1, 2 ; 42, 43) comprises a closure member (19 ; 68, 70), which opens automatically at the time of the mechanical application of force to the cartridge.

21. Cartridge arrangement according to Claim 20, characterised in that at the outlet end, each of the cartridges (1, 2 ; 42, 43) is provided with a closure member (19 ; 68) opening automatically under pressure.

22. Cartridge arrangement according to Claim 20 or 21, characterised in that at the outlet end of the cartridges (1, 2 ; 42; 43), the closure member is constructed as a membrane (19 ; 68) with a predetermined breaking point, which at the time of an increase in pressure in the cartridge (1, 2 ; 42, 43), opens the passage through the outlet connection (8 ; 60, 61) thereof.

23. Device according to Claim 20, characterised in that the closure member located on the side of the piston-like insert (69) is constructed as a membrane (70) with a predetermined breaking point, which upon the application of pressure provides access to the piston-like insert (69).

24. Device according to Claim 22 or 23, characterised in that the predetermined breaking point is formed by an annular groove (20).

25. Device according to Claim 20, characterised in that the closure member to be opened under the action of pressure is constructed as a valve at the outlet end of the cartridge.

26. Device according to Claim 20, characterised in that at the outlet end of the cartridge (42, 43), the closure member is constructed as a membrane (68) and lies in the range of action of a device (52, 67) for perforating the membrane (68), which device (52, 67) is disposed at the end of the associated connecting pipe (46, 47) adjacent the cartridge.

27. Device according to Claim 26, characterised in that the connecting pipe (46, 47) disposed between the cartridge (42, 43) and the mixing device (48) and the associated cartridge (42, 43) are able to move relative to each other.

28. Device according to Claim 27, characterised in that each cartridge (42, 43) is able to move axially in the direction of the longitudinal axis of the cartridges, with respect to the associated device (52, 67) for perforating the membrane (68).

29. Device according to Claim 26, characterised in that each cartridge (42, 43) is able to rotate with respect to the associated device (52, 67), for perforating the membrane (68).

30. Device according to Claim 20, characterised in that located at the end of the cartridges (42, 43), behind the piston-like insert (69) of the cartridges, is a membrane (70), which is destroyed upon the application of a compressive force acting along the longitudinal axis of the cartridges.

31. Device according to Claim 20, characterised in that that a tear-off cap (17) is provided at the end of the cartridges (1, 2), behind the piston-like insert (3, 3').

32. Device according to Claim 30 or 31, characterised in that a material absorbing moisture is provided between the membrane (70) or the tear-off cap (17) and the piston-like insert (3, 3' or 69).

## Revendications

1. Installation pour doser et mélanger au moins deux composants réactionnels en vue de la formation d'un agent à plusieurs composants destiné à être directement utilisé, installation présentant une cartouche (1, 2 ; 42, 43) de réception de chaque composant réactionnel avec des pièces déplaçables à effet de piston (3, 3' ; 69) qui agissent chacune avec un organe d'éjection (4, 4' ; 44, 45) et installation dans laquelle les cartouches (1, 2 ; 42, 43) sont logées dans des organes de retenue (16 ; 40, 41) et reliées à un dispositif mélangeur commun (10 ; 48) muni d'une ouverture de sortie (13 ; 49) pour la prise de l'agent à plusieurs composants, cependant que, pour actionner les organes d'éjection (4, 4' ; 44, 45) et le dispositif mélangeur (10 ; 48), il existe au moins une commande (31, 31'), cependant que chaque cartouche (1, 2 ; 42, 43) est reliée au dispositif mélangeur (10 ; 48) par l'intermédiaire d'une conduite de raccordement (9 ; 46, 47) et cependant que les cartouches (1, 2 ; 42, 43) sont insérables dans l'installation avec le dispositif mélangeur (10 ; 48) et les conduites de raccordement (9 ; 46, 47) et démontables de celle-ci après utilisation, caractérisée en ce que les cartouches (1, 2 ; 42, 43) constituent, avec les conduites de raccordement (9 ; 46, 47) et le dispositif mélangeur (10 ; 48) une unité inséparable sans destruction et en ce que chaque cartouche (1, 2 ; 42, 43) présente à l'extrémité de sortie, ainsi que, le cas échéant, sur le côté de la pièce à effet de piston (3, 3' ; 69), une fermeture (19 ; 68, 70) qui s'ouvre automatiquement sous l'effet mécanique d'une force produite lors de la commande du dispositif sur la cartouche (1, 2 ; 42, 43).

2. Installation selon revendication 1, caractérisée en ce qu'à l'extrémité de sortie et/ou sur le côté de la pièce à effet de piston (3, 3' ; 69) des cartouches (1, 2 ; 42, 43) est prévue une fermeture (70) s'ouvrant sous l'effet de la pression.

3. Installation selon revendication 2, caractérisée en ce que la fermeture (19 ; 68) s'ouvrant sous l'effet de la pression et située à l'extrémité de sortie de la cartouche (1, 2 ; 42, 43) est conçue en tant que membrane à zone frangible, membrane qui, lors d'une élévation de la pression dans la cartouche (1, 2 ; 42, 43), libère le passage à travers le tuyau de rallonge de sortie (8 ; 60, 61) de celle-ci.

4. Installation selon revendication 2, caractérisée en ce que la fermeture disposée sur le côté de la pièce à effet de piston (69) est conçue en tant que membrane (70) à zone frangible, qui, lors de la pressurisation, libère l'accès à la pièce à effet de piston (69).

5. Installation selon revendication 3 ou 4, caractérisée en ce que la zone frangible est constituée par une rainure en forme d'anneau (20).

6. Installation selon revendication 2, caractérisée en ce que la fermeture à ouvrir sous l'effet de la pression, à l'extrémité de sortie de la cartouche (1, 2 ; 42, 43), est conçue en tant que soupape.

7. Installation selon revendication 1, caractérisée en ce que la fermeture à l'extrémité de sortie de la cartouche (42, 43) est conçue en tant que membrane et se trouve dans la zone d'action d'un dispositif (52, 67) de percée de la membrane (68), dispositif qui est disposé à l'extrémité de la conduite de raccordement (46, 47), située du côté de la cartouche.

8. Installation selon revendication 7, caractérisée en ce que la conduite de raccordement (46, 47) disposée entre la cartouche (42, 43) et le dispositif mélangeur (48) et la cartouche correspondante (42, 43) sont relativement mobiles l'une par rapport à l'autre.

9. Installation selon revendication 8, caractérisée en ce que la cartouche (42, 43) est déplaçable axialement dans le sens de l'axe longitudinal de la cartouche, par rapport au dispositif (52, 67) de percée de la membrane (68).

10. Installation selon revendication 8 ou 9, caractérisée en ce qu'une membrane d'obturation (60) située dans le tuyau de rallonge de sortie (60) de la cartouche (42, 43), un élément d'accouplement (50) raccordé au tuyau de rallonge de sortie (60) de la cartouche (42, 43) et un élément de coupe (52) logé sur ce dernier sont prévus de telle sorte que, par le mouvement relatif entre la cartouche (42, 43) et l'élément d'accouplement (50), la membrane d'obturation (68) s'ouvre au moins dans une proportion telle que, par suite de la pression exercée sur elle, au début du processus d'éjection, par la substance se trouvant dans la cartouche, elle libère totalement ou partiellement la voie d'écoulement de cette substance.

11. Installation selon revendication 8, caractérisée en ce que la cartouche (42, 43) est déplaçable par rapport au dispositif (52, 67) de percée de la membrane.

12. Installation selon revendication 8, caractérisée en ce que le dispositif (48) ainsi que les conduites de raccordement (46, 47) ne sont pas déplaçables dans l'installation par rapport aux cartouches (42, 43), et que les cartouches (42, 43) sont toutefois mobiles dans le sens de leur axe longitudinal, dans les organes de retenue (40, 41) de l'installation.

13. Installation selon revendication 8, caractérisée en ce que chaque conduite de raccordement (46, 47) présente un élément d'accouplement (50) à son extrémité tournée vers la cartouche (42, 43), élément qui est relié à l'organe de retenue correspondant (40, 41) pour recevoir la cartouche et qui renferme le dispositif (52, 67) de percée de la membrane (68).

14. Installation selon revendication 13, caractérisée en ce que l'élément d'accouplement (50) est conçu en tant que corps de tuyau et présente à une extrémité une rainure encastrée dans la paroi de celui-ci à partir de la face frontale, rainure qui est conçue comme chambre d'immersion (51) pour le logement déplaçable du tuyau de rallonge de sortie correspondant (50) de la cartouche.

15. Installation selon revendication 4, caractérisée en ce que la paroi interne (51') limitant la chambre d'immersion (51) est conçue en tant qu'élément de coupe (52) pourvu d'une arête de coupe (67).

16. Installation selon revendication 1, caractérisée en ce que le dispositif mélangeur (48) et les organes d'éjection (44, 45) sont commandés par un moteur de commande commun et un engrenage qui est intercalé à sa suite.

17. Installation selon revendication 1, caractérisé en ce qu'entre la pièce à effet de piston (69) de la cartouche (42, 43) et l'organe d'éjection (44, 45) de celle-ci, est disposée une membrane (70) qui est détruite lors de la mise en service de l'organe d'éjection (44, 45).

18. Installation selon revendication 1, caractérisée en ce que chaque cartouche (1, 2) est munie à l'extrémité de la pièce à effet de piston (3, 3') d'un couvercle de déchirage (17).

19. Installation selon revendication 17 ou 18, caractérisée en ce qu'entre la membrane (70) ou le couvercle de déchirage (17) et la pièce à effet de piston (69 ou 3, 3') se trouve une matière absorbant l'humidité.

20. Disposition de cartouche avec dispositif mélangeur pour la réception d'un composant réactionnel par cartouche, destinée à être utilisée dans une installation pour doser et mélanger selon la revendication 1, chaque cartouche (1, 2 ; 42, 43) étant munie d'une pièce à effet de piston (3, 3' ; 69) et d'un tuyau de rallonge de sortie (8 ; 60, 61) servant de raccordement au dispositif mélangeur (10 ; 48), caractérisée en ce que chaque cartouche (1, 2 ; 42, 43) est reliée de façon inséparable sans destruction à la conduite de raccordement correspondante (9 ; 46, 47) et au dispositif mélangeur (10 ; 48) et en ce que chaque cartouche (1, 2 ; 42, 43) présente à son extrémité de sortie ainsi que, le cas échéant, sur le côté de la pièce à effet de piston (3, 3' ; 69), une fermeture qui s'ouvre automatiquement sous l'effet mécanique d'une force sur la cartouche.

21. Disposition de cartouche selon revendication 20, caractérisée en ce que chacune des cartouches (1, 2 ; 42, 43) est munie à son extrémité de sortie d'une fermeture (19 ; 68) qui s'ouvre automatiquement sous la pression.

22. Disposition de cartouche selon revendication 20 ou 21, caractérisée en ce que la fermeture à l'extrémité des cartouches (1, 2 ; 42, 43) est conçue en tant que membrane (19 ; 68) à zone frangible, qui, lors d'une augmentation de la pression dans la cartouche (1, 2 ; 42, 43), libère l'accès par l'intermédiaire du tuyau de rallonge de sortie (8 ; 60, 61) de celle-ci.

23. Installation selon revendication 20, caractérisée en ce que la fermeture disposée sur le côté de la pièce à effet de piston (69) est conçue en tant que membrane (70) à zone frangible, qui, lors de la pressurisation, libère l'accès à la pièce à effet de piston (69).

24. Installation selon revendication 22 ou 23, caractérisée en ce que la zone frangible est constituée par une rainure en forme d'anneau (20).

25. Installation selon revendication 20, caractérisée en ce que la fermeture s'ouvrant sous l'effet de la pression est conçue à l'extrémité de sortie de la cartouche en tant que soupape.

26. Installation selon revendication 20, caractérisée en ce que la fermeture à l'extrémité de sortie de la cartouche (42, 43) est conçue en tant que membrane (68) et se trouve dans la zone d'action d'un dispositif (52, 67) de percée de la membrane (68), dispositif qui est disposé à l'extrémité, située du côté de la cartouche, de la conduite de raccordement correspondante (46, 47).

27. Installation selon revendication 26, caractérisée en ce que la conduite de raccordement (46, 47) disposée entre la cartouche (42, 43) et le dispositif mélangeur (48), ainsi que la cartouche correspondante (42, 43) sont relativement mobiles l'une par rapport à l'autre.

28. Installation selon revendication 27, caractérisée en ce que chaque cartouche (42, 43) est déplaçable axialement dans le sens de son axe longitudinal, par rapport au dispositif correspondant (52, 67) de percée de la membrane (68).

29. Installation selon revendication 26, caractérisée en ce que chaque cartouche (42, 43) peut tourner par rapport au dispositif correspondant (52, 67) de percée de la membrane (68).

30. Installation selon revendication 20, caractérisée en ce qu'à l'extrémité des cartouches (42, 43), derrière leur pièce à effet de piston (69), est disposée une membrane (70) qui est détruite lors de l'intervention d'une force de pression agissant sur l'axe longitudinal de la cartouche.

31. Installation selon revendication 20, caractérisée en ce qu'à l'extrémité des cartouches (1, 2), derrière la pièce à effet de piston (3, 3'), est prévu un couvercle de déchirage (17).

32. Installation selon revendication 30 ou 31, caractérisée en ce que, entre la membrane (70) ou le couvercle de déchirage (17) et la pièce à effet de piston (3, 3' ou 69), se trouve une matière absorbant l'humidité.

## FIG.1

## FIG.2

## FIG.3

FIG.4

EP 0 313 519 B1

FIG.6

FIG.5

EP 0 313 519 B1

FIG.7

FIG.8